# EUROPEAN PATENT SPECIFICATION

(11) **EP 0 315 324 B1**
(45) Date of publication and mention of the grant of the patent: **10.01.1996**
(21) Application number: 88309243.9
(22) Date of filing: 04.10.1988
(51) Int. Cl.: H01G 4/12

(54) **Dielectric ceramic with high k, low df and flat tc**
Dielektrische Keramik mit hoher Dielektrizitätskonstante, niedrigem Verlustfaktor und flachem Temperaturkoeffizienten
Céramique diélectrique à constante diélectrique élevée, à faible facteur de dissipation et à coefficient de température plat

(30) Priority: 03.11.1987 WO PCT/US87/02907
(43) Date of publication of application: 10.05.1989
(73) Proprietor: TAM CERAMICS INC., Niagara Falls, NY 14305 (US)
(72) Inventor: Dean, Terence C., Youngstown New York 14174 (US)
(74) Representative: Crisp, David Norman

(56) References cited:
- EP-A- 0 200 573
- EP-A- 0 270 098
- WO-A-88/08830
- US-A- 4 710 227
- JOURNAL OF THE AMERICAN CERAMIC SOCIETY, vol. 46, no. 8, 21st August 1963,pages 359-365; P.K. GALLAGHER et al.: "Preparation of semiconducting Titanates by chemical methods"
- JOURNAL OF THE AMERICAN CERAMIC SOCIETY, vol. 54, no. 9, September 1971, pages452-454, US; M. KAHN: "Preparation of small-grained and large-grained ceramics for Nb-doped BaTiO"
- CHEMICAL ABSTRACTS, vol. 106, no. 16, April 1987, page 714, abstract no.130298w, Columbus, Ohio, US & JP-A-61-193 419

## Description

The present invention relates to a process for making a dielectric ceramic having high dielectric constants (K), e.g., between about 4900 and about 5400; low dissipation factors (DF), e.g., below about 2%; high insulation resistance (R) capacitance (C) products (RC), e.g., above about 7000 ohm-farads at 25°C and above about 3000 ohm-farads at 125°C; and stable temperature coefficient (TC) characteristics in which, e.g., the dielectric constant does not alter from its base value at 25°C by more than about plus or minus 15% over a temperature range from -55°C to 125°C.

Multilayer ceramic capacitors (MLC's) are commonly made by casting or otherwise forming insulating layers of dielectric ceramic powder; placing thereupon conducting metal electrode layers, usually a palladium/silver alloy in the form of metallic paste; stacking the resulting elements to form the multilayer capacitor; and firing to densify the material, thus forming a multilayer ceramic capacitor. Other processes for forming MLC's are described in U.S. Patents Nos. 3,697,950 and 3,879,645. Journal of the American Ceramic Society, vol. 54, no. 9, Sept. 1971, pages 452-454, US; M. KAHN, describes a method of admixing niobium pentoxide with barium titanate. Kahn precipitates niobium pentoxide from an ethylene glycol solution of niobium pentachloride and mixes it with a barium titanate slurry. However, there is no teaching of controlling the association of niobium pentoxide and barium titanate particles such that a uniform distribution of niobium pentoxide particles occurs. A high dielectric constant is important, because it allows a manufacturer to build smaller capacitors for a given capacitance. The electrical properties of many dielectric ceramic compositions may vary substantially as the temperature increases or decreases, however, and the variation of the dielectric constant and the insulation resistance with temperature and the dissipation factor, are also important factors to be considered in preparing ceramic compositions for use in multilayer capacitors.

In a desirable dielectric ceramic composition for use in a multilayer capacitor for applications requiring stability in the dielectric constant over a wide temperature range, the dielectric constant does not change from its base value at 25°C (room temperature) by more than about plus or minus 15%. The insulation resistance and capacitance product of such a composition should be more than 1000 ohm-farads at 25°C and more than 100 ohm-farads at maximum working temperature, 125°C in most cases. In addition, the dissipation factor should be as close to 0% as possible.

The method commonly used to produce such temperature stable capacitors consists of firing BaTiO₃, used because of its high dielectric constant, together with minor ceramic oxide additives (dopants) which comprise minor amounts of elements or compounds which control the final dielectric properties. The degree of distribution of the ceramic oxide dopants throughout the barium titanate in the unfired state will determine such things as the extent of solid solution development during firing, grain growth, and the composition of the final fired grain and grain boundary. Thus, the efficiency of mixing is a key factor in the process to achieve the desired electrical properties in the finished multilayer ceramic capacitor. Until the present invention, however, the very minor amounts of ceramic oxide dopants have been very difficult to distribute in a homogeneous fashion throughout the blended ceramic dielectric composition.

It is well known that, in order for compositional development to take place during the firing stage of the manufacture of a multilayer ceramic capacitor, the particles of the ceramic oxide dopants of a dielectric composition must be in finely divided form to ensure adequate mixing of the ceramic oxide dopants with the BaTiO₃. Ideally, in order for complete compositional development to take place during sintering of the ceramic dielectric composition, it is understood that the minor components must disperse themselves such that the environment around each barium titanate grain is the same throughout the bulk of the composition and such that the environment within each barium titanate grain is the same throughout the bulk of the composition. Typically, this is attempted by milling the components of the composition to a particle size of approximately 1 micron (1x10⁻⁶m). Homogeneous distribution will be enhanced, however, by introducing ceramic oxide dopants of a smaller particle size, e.g., approximately 0.1 micron (1x10⁻⁷m) while continuing to use BaTiO₃ particles of 1.0 micron (1x10⁻⁶m) in size. By way of illustration, using uniformly distributed powders of approximately 1 micron in spherical shape, it can be calculated that a unit of mix, prepared according to the proportions disclosed in the present invention, would contain 400 particles of barium titanate, 5 particles of niobium pentoxide and 1 particle of cobalt oxide. If, however, barium titanate powder of approximately 1.0 µm (1.0 micron) average particle size is mixed with niobium pentoxide and cobalt oxide of approximately 1.0 µm (0.1 micron) particle size, and assuming that these particles are perfectly spherical and uniformly distributed, it can be calculated that a unit of mix would contain 400 particles of barium titanate, 5000 particles of niobium pentoxide and 1000 particles of cobalt oxide. Thus for each barium titanate particle there would be approximately thirteen niobium pentoxide particles and three cobalt oxide particles. It would therefore be expected that compositional development during sintering would occur much more efficiently and the effectiveness of the ceramic oxide dopant additives would be greatly enhanced compared to that achieved by mixing 1 micron particles of the minor components.

It is well known in the art that ceramic oxide particles can be reduced in size to about 1 µm (1 micron) by milling techniques. It has however been impossible to mill finely divided powders in the order of 0.1 µm (0.1 microns) because milling techniques incur the risk of increasing the contamination levels of undesirable species, present in the milling media, and because milling efficiencies are significantly reduced as the particle size of the powder reaches submicron levels. The process described in this invention provides a means for enhancing uniformity of distribution of minor component dopants in a ceramic mixture before firing, and thus a means for enhancing the compositional development during sintering. This is done by precipitating minor component dopants in a finely divided form, of approximately 0.1 µm (0.1 micron) average particle size, in a controlled manner such that they are associated with major ceramic component particles. The term "associated", as used herein, identifies the heterocoagulation of unlike particles produced by precipitation in accordance with the method of the invention as disclosed herein.

In order to precipitate 0.1 µm (0.1 micron) particles of a dopant in a slurry of 1.0 µm (1.0 micron) particles of a major ceramic component such that the 0.1 µm (0.1 micron) particles of the dopant are associated with the 1.0 µm (1.0 micron) particles of the major component, it is taken advantage of the surface charge properties of particles in aqueous media. These surface charge properties can be quantified in terms of zeta potential. This association maximizes the contact surface area between the two species.

It is well known that the sign and magnitude of the charge on the surface of a particle in suspension can be altered by changing the properties of the medium. Under certain conditions, it is possible to have chemically dissimilar particles in suspension which have surface charges of opposite sign. One of the most effective ways to produce particles of opposite surface charge in aqueous solution is the conventional method of altering the pH of the medium. See Reference "Dispersion of Powders in Liquids" G.D. Parfitt, Halsted Press 1969.

The zeta potential of a species of particles can be determined by analysis of the behavior of the particles in suspension in a medium of a specific pH, using an electrophoresis cell in which the particle velocity is measured as a function of the applied potential gradient. The particle velocity is proportional to the zeta potential. Thus, by carrying out a series of experiments at different pH values, one will obtain a zeta potential curve, relating zeta potential and pH, which will indicate both the sign and magnitude of the surface charge of the particles in suspension over a range of pH values.

There is an important point in the zeta potential curve at which the charge on the surface of a particle is zero. This is known as the point of zero charge and sometimes is referred to as the isoelectric point (IEP). Particles in suspension at their IEP are believed to tend to agglomerate with each other due to van der Waals forces of attraction. To the contrary, particles having the same charge, either positive or negative, tend to remain separated from particles of like charge because of the coulombic forces of repulsion. If two species of particles charged oppositely to each other are in suspension, particles of the first species will attract particles of the second species and will not attract particles of the like charged species, thus forming a heterocoagulation of the species. This effect of heterocoagulation of species is important because it provides a means for associating dopant particles with major ceramic component particles and, is equally important because it prevents the homocoagulation of "like" particles. Furthermore, when the dopant particles are precipitated such that the 0.1 micron dopant particles associate in this manner with the 1.0 micron particles of the major ceramic component, then the major ceramic component particles become coated with the dopant particles. Consequently, prior to the sintering stage in the production of a multilayer ceramic capacitor, the dopant particles are precisely in the position desired to produce a uniform, dopant rich grain boundary phase surrounding a major ceramic component core grain during the sintering of the composite. This maximizes the effectiveness of the dopant as a grain growth inhibitor and enhances the electrical properties of the finished dielectric ceramic capacitor.

Thus, it is advantageous to work in a pH range in which the 0.1 µm (0.1 micron) particles of the dopant are charged oppositely to the 1.0 µm (1.0 micron) particles of the major ceramic component.

For example, where the major component is barium titanate and the dopant is niobium pentoxide, the isoelectric point of the niobium pentoxide precipitated in the process of this invention is at pH 3.1 and the isoelectric point of the barium titanate is at pH 9.0. At pH values lower than 3.1, the niobium pentoxide particles are positively charged, and at pH values higher than 3.1 the niobium pentoxide particles are negatively charged. At pH values higher than 9.0 the barium titanate particles are negatively charged and at pH values lower than 9.0 the barium titanate particles are positively charged. Therefore, in the range of pH values between 3.1 and 9.0 the niobium pentoxide particles will be negatively charged and the barium titanate particles will be positively charged. This condition favors association of the two different charged species with each other, while at the same time it causes like charged species to repel each other, and thus avoids homocoagulation which can cause uneven grain size.

The preferred pH condition would be one in which the species are oppositely charged and the magnitude of the difference between the zeta potentials of the major component particles and the dopant particles is as large as possible. This would cause the greatest attraction between the two different species, and simultaneously it would cause the greatest repulsion of like species, providing a very desirable state of dispersion of the dopant particles throughout the major component particles. For example, in the case of barium titanate and niobium pentoxide, this preferred condition would occur at pH 7, where the zeta potential of the barium titanate is +30 milivolts, and the zeta potential of the niobium pentoxide is -45 milivolts.

The advantage of precipitating the niobium pentoxide particles using the preferred pH conditions, such that the 0.1 µm (0.1 micron) particles of niobium pentoxide are associated with the 1.0 µm (1.0 micron) particles of the barium titanate and not with themselves, is that this places the niobium pentoxide particles precisely in the position desired to produce a uniform niobium pentoxide rich grain boundary phase surrounding a barium titanate core grain. This positioning of the niobium pentoxide enables it to control grain growth during the sintering of the ceramic, and the electrical properties of the dielectric ceramic capacitor are thus enhanced. It is known that niobium pentoxide diffuses very slowly at the sintering temperatures used in the production of MLC's containing barium titanate and niobium pentoxide, i.e., approximately 1300°C. Consequently, if the niobium pentoxide is not distributed uniformly around the barium titanate particles in suspension during the mixing stage, then, during the sintering stage, the slow diffusion rate will lead to non-uniformly distributed niobium pentoxide in the developing microstructure, causing uneven grain growth and consequently inferior dielectric properties. Non-uniform distribution can occur when 1.0 µm (1.0 micron) particles of niobium pentoxide and 1.0 µm (1.0 micron) particles of barium titanate are mixed in a conventional manner by dry or wet mixing the ingredients in a mill jar or the like, or when the niobium pentoxide is precipitated under conditions where homocoagulation of the barium titanate or niobium pentoxide is favored.

For the purposes of the specific examples given in this invention in which niobium pentoxide and cobalt oxalate are precipitated in a suspension of barium titanate, it should be noted that it is not necessary to precipitate the cobalt oxalate such that it associates with the barium titanate. This is true because the cobalt oxide, formed from the cobalt oxalate during firing, is present as an additive to compensate for the electronic charge imbalance created by the addition of the niobium pentoxide to the barium titanates and not as a grain growth inhibitor. Cobalt oxide diffuses very quickly at the sintering temperatures used to produce MLC's and, therefore, as illustrated in the examples, its effectiveness is not necessarily reduced by its being present as 1.0 µm (1.0 micron) powder.

The process described in this invention has the advantage of producing ceramic oxide particles of the order of 0.1 µm (0.1 microns) without the problems associated with current milling techniques.

A second advantage of the process is the production of ceramic dielectric compositions with improved electrical properties, i.e., higher dielectric constants, lower dissipation factors and higher insulation resistance capacitance products than those processed by conventional mixing techniques. The higher dielectric constant achieved as a result of this process has the important advantage of allowing capacitor manufacturing companies to produce multilayer ceramic capacitors with higher capacitance values for a given chip size, or the same capacitance values at a reduced chip size, given that the number of active insulating layers and the thickness of each insulating layer are constants. The benefits are thus reduced cost and/or miniaturization.

We have now found it possible to provide a mixture of particles of one or more minor ceramic oxide components with particles of a major ceramic oxide component wherein the particles of at least one of the minor ceramic oxide components are associated with the particles of the major ceramic component;
to produce a ceramic composition having a dielectric constant between about 4900 and about 5400 at 25°C, a dissipation factor less than about 2.0%, and a stable temperature coefficient in which the dielectric constant does not vary by more than about plus or minus 15% from its reference value at 25°C; and
to produce a ceramic composition having a dielectric constant multilayer ceramic capacitors using precious metal internal electrodes and having a dielectric constant between about 4900 and 5400 at 25°C, a dissipation factor of less than 2.0% and insulation resistance capacitance product of more than 7000 ohm farads at 25°C and more than 3000 ohm farad at 125°C, and also having a stable TC characteristic in which the dielectric constant does not vary more than about plus or minus 15% from its reference value at 25°C.

The present invention provides a process defined by the features of claim 1. It serves for producing a mixture of ceramic oxides, including a major ceramic oxide component and one or more minor component dopants, wherein at least one of the minor ceramic oxide dopants must be, and the other dopant(s) may be, precipitated and wherein the process conditions are controlled such that the precipitated dopant particles are charged oppositely to, and are associated with, the particles of the major ceramic oxide component.

The process of the present invention as defined in claim 1 serves for producing a ceramic composition having high dielectric constant, low dissipation factor, and stable TC characteristics including a major component, preferably comprising high purity barium titanate, and minor component dopants, preferably comprising niobium pentoxide and cobalt oxide, wherein the niobium pentoxide dopant must be, and the cobalt oxide dopant may be, precipitated to provide the small particles. Dielectric ceramic compositions chosen for processing contain the major component preferably barium titanate, which comprises from about 98.5 to about 98.8 per cent by weight and the minor component dopants, preferably niobium pentoxide and cobalt oxide, which comprise from about 1.0 to about 1.1 per cent by weight and from about 0.2 to about 0.3 per cent by weight respectively.

The process of this invention provides a method for making a dielectric ceramic having dopant particles uniformly dispersed therein comprising:
dispersing 1 micron (1 x 10⁻⁶m) diameter major component particles in a liquid medium;
precipitating 0.1 micron (1 x 10⁻⁷m) diameter dopant particles from the liquid medium which also contains a precursor of the dopant under conditions such that the major component particles are charged oppositely to the dopant particles, which conditions are controlled by maintaining the pH of the liquid medium within a selected range of values, such that the dopant particles are dispersed throughout the major component particles and the dopant particles are associated with the major component particles;
removing the liquid medium from the dispersion; and
sintering the remainder.

The invention also provides a process for producing a multilayer ceramic capacitor having a plurality of layers of dielectric ceramic prepared according to the process of the present invention and a plurality of electrodes between the dielectric layers wherein the dopant particles comprise precipitated niobium pentoxide particles and cobalt oxide particles and the major component particles comprise barium titanate particles, the dopant particles being in fixed proportion to the major component particles such that the dielectric ceramic when fired has a dielectric constant between about 4900 and 5400, a dissipation factor of below about 2.0%, an insulation resistance capacitance product above about 7000 ohm-farads at 25°C and above about 3000 ohm-farads at 125°C and a temperature stable temperature coefficient in which the dielectric constant does not vary more than plus or minus 15% from its value at 25°C over the temperature range from -55°C to 125°C.

It will be understood by those skilled in the art that the term dopant precursor as used herein means the species of dopant or dopant ion present in the liquid medium prior to the precipitation step.

Various preferred features and embodiments of the present invention will now be described by way of non-limiting example. As set forth below, the method of producing a dielectric ceramic of the present invention has several advantages which result in substantial technological advancement and cost savings while enhancing desirable physical and electrical properties.

The method allows producing a dielectric composition having a dielectric constant between 4900 and 5400, a dissipation factor of less than 2.0%, and with stable TC characteristics. This process differs substantially from those disclosed in the prior art in which conventional mixing techniques are used and in which desirable dielectric properties, such as a higher dielectric constant, are sacrificed in order to obtain materials which have stable TC characteristics. Because conventional processes produce materials with dielectric constants not more than about 3000 to about 4700, by the use of the process of the current invention, which achieves higher dielectric constants, it is possible to produce multilayer ceramic capacitors with significantly higher capacitance values under the same physical size restriction or the smallest possible physical size under the same capacitance restriction. The higher dielectric constants also result in using significantly less ceramic and electrode material, and thus the manufacturing cost can be significantly reduced by using the process described in the current invention.

The process of this invention provides a means for enhancing the uniformity of the distribution of the dopants in the ceramic mixture before firing by using major component powder of approximately 1.0 µm (1.0 micron) average particle size, and by precipitating one or both of the dopants in a finely divided form, approximately 0.1 µm (0.1 micron) average particle size, in a controlled manner, such that the dopant particles are associated with the major ceramic component particles. The compositional development during sintering occurs more efficiently because of increased homogeneity of the mixture and the effectiveness of the dopant additives is greatly enhanced compared to that achieved by mixing 1.0 µm (1.0 micron) particles of the dopants.

The process of the invention involves precipitating a dopant from a liquid medium and mixing the precipitated dopant with a slurry of the major component such that the dopant particles are uniformly dispersed throughout the major component particles.

In a preferred embodiment, the major component of the ceramic composition is slurried in liquid media followed by the addition of a precise amount of a solution containing a precursor of a dopant. Alternatively, the major component can be slurried in a solution containing a precursor of a dopant. The dopant is then precipitated from the solution in a finely divided form in a controlled manner such that intimate contact between the major component particles and the dopant is achieved. This procedure can be used to introduce one or more dopants. The major component is preferably chosen from the group of perovskite forming metal oxides.

The dopant is precipitated from the solution in a finely divided form while the charges of the major ceramic component particles and the dopant particles are controlled such that intimate contact between the major component particles and the dopant is achieved. This procedure can also be used to introduce one or more dopants, The major component is again preferably chosen from the group of perovskite forming metal oxides.

In an especially preferred embodiment, the major component is barium titanate (BaTiO₃), which is slurried in water and the two dopants are niobium pentoxide and cobalt oxide. In this embodiment the niobium pentoxide is precipitated in the presence of the barium titanate, while the cobalt oxide may be introduced to the slurry either in powder form or as a precipitate. The precursor solution of niobium pentoxide is a solution of niobium pentachloride in ethanol and the niobium pentoxide is precipitated with concentrated ammonium hydroxide.

Following filtration and washing, the intimate mixture of components may be mixed with a suitable binder composition; cast into a sheet using standard methods; formed into a multilayer capacitor structure with internal electrodes such as 70% paladium/30% silver; and fired at about 1280°C to about 1350°C for about 2 hours. Any conventional ceramic binder composition, which is compatible with the other materials used and which simply provides a vehicle for dispersing the ceramic particles and holding them together when the solvent is removed, may be used with this invention. Suitable binder compositions are described in "Ceramic Process Before Firing", G.Y. Onoda Jr., et al. John Wiley and Sons (1978) chapter 19. Corn syrup and polyvinyl alcohol are examples of suitable binder compositions.

The fired dielectric composition of this invention is processed into a multilayer ceramic capacitor with high dielectric constant between about 4900 and about 5400, low dissipation factors below 2%, and insulation resistance products at 25°C, 50 VDC/mil (20x10⁻⁵ VDC/m) of greater than 7000 ohm-farads and at 125°C, 50 VDC/mil (20x10⁻⁵ VDC/m) of grea er than 3000 ohm-farads and with stable TC characteristics such that the dielectric constant does not vary by more than plus or minus 15% of the reference value at 25°C.

In another especially preferred embodiment, high purity, barium titanate (99.9 to 99.95% pure) of fine particle size (0.8-1.3x10⁻⁶m (.8 to 1.3 microns)) is stirred in de-ionized water. Cobalt oxide of fine particle size 0.8-1.3 µm (.8 to 1.3 microns) is added and the mixture is stirred continuously for 30 minutes to 33 hours to ensure adequate mixing of the two reagents. A solution of niobium pentachloride in ethanol is added to the barium titanate/cobalt oxide slurry. The ratio of barium titanate, cobalt oxide and niobium pentachloride is such that the ratio of barium titanate: niobium pentoxide : cobalt oxide in the resulting ceramic composition is 9871 : 107 : 22. The resulting slurry is stirred for 10 to 60 minutes and concentrated ammonium hydroxide is added to precipitate hydrous niobium pentoxide. The composite slurry is filtered and washed with deionized water until the washings when tested with silver nitrate/nitric acid solution, show a complete absence of silver chloride precipitate. The washed mixture of ceramic oxides is then dried in a laboratory oven at 110°C. The uniformly blended ceramic composition is then charged into a ball mill together with a binder solution made by uniformly mixing dioctylphthalate "NUOSTABE V-1444™", ^{1/}ethanol, toluene and "BUTVAR B-76™"^{2/} vinyl resin. The ratio of ceramic composition to binder is 400 : 218. The slurry is mixed for 5 to 20 hours, discharged and filtered through a 44 micron (4.4x10⁻⁵m)screen. This slurry, having a viscosity of about 1500 centipoise (1.5Pa.s), is then de-aired and cast, in accordance with standard techniques, into a tape with a thickness of about 1.5 mils (3.81x10⁻⁵m). The tape is converted into a multi-layer ceramic capacitor having 70% paladium/30% silver electrodes via conventional processes well known in the industry. The capacitors are preheated to 260°C for 48 hours, placed on zirconia setters and sintered at 1280°C to 1340°C for 1 to 3 hours. The sintered capacitors have 10 active dielectric layers with dielectric thickness of about 1.1 to about 1.2 mil (2.79-3.05x10⁻⁵m). Termination electrodes of Dupont™ silver paint number 4822, which is a mixture of silver and glass frit in a binder, are applied at opposite ends of the multi-layer capacitor to connect alternate electrode layers and these capacitors are fired at 815°C in a tunnel furnace. The resulting multi-layer capacitor has a dielectric constant of approximately 5400 and a dissipation factor of approximately 1.57% measured at 1KHz at 1VRMS, and TC characteristics such that the dielectric constant does not vary from its value at 25°C by more than about ±9.9% between -55°C and +125°C.
1 "NUOSTABE V-1444™" is an alkali ion free organic solvent dispersing agent available from Nuodex Co. Inc., New Jersey.
2 "BUTVAR B-76™" is a binder comprising a mixture of polyvinyl butyral, polyvinyl alcohol and polyvinyl acetate available from Monsanto Corp.

The invention will be further illustrated by the following examples, but the invention is not intended to be limited thereto. The values given for the examples herein are subject to variations based on factors known in the art.

### Example 1

500 g of high purity barium titanate was stirred in 500 g of deionized water. 1.122 g of fine particle size 1.0 µm (1.0 micron) cobalt oxide (CoO) was added and stirring continued for 3 hours to ensure adequate mixing of the two reagents. 188.9 ml of a solution containing 28.74 grams per litre of niobium pentachloride in ethanol were added to the barium titanate/cobalt oxide slurry from a burette. The resultant slurry was stirred for 30 minutes and 20 mls of concentrated ammonium hydroxide added from a burette to bring the pH to 7.0 and to precipitate hydrous niobium pentoxide. The composite slurry was filtered and washed with deionized water until the washings when tested with silver nitrate/nitric acid solution, showed a complete absence of silver chloride precipitate. The washed mixture of ceramic oxides were then dried in a laboratory oven at 110°C.

400 grams of the uniformly blended ceramic composition was then charged into a ball mill together with 218 grams of a binder solution made by uniformly mixing 186 grams of dioctylphthalate, 90 grams NUOSTABE V-1444™", 597 ml of ethanol and 270 mls toluene, and 273 grams of BUTVAR B-76™ vinyl resin.

This slurry was mixed for 16 hours, discharged and filtered through a 44 micron screen. This slurry having a viscosity of about 1500 centipoise (1.5 Pa.s) was then de-aired and cast, in accordance with standard techniques, into a tape with a thickness of about 38.1 µm (1.5 mils). The tape was converted into a multilayer ceramic capacitor having 70 percent palladium/30 percent silver electrodes via conventional processes well known in the industry. The capacitors were preheated to 260°C for 48 hours, placed on zirconia setters and sintered at 1280°C to 1340°C for 2 hours. The sintered capacitors had 10 active dielectric layers with dielectric thickness of about 27.9-30.5 µm (1.1 - 1.2 mil). Termination electrodes of Dupont™ silver paint No. 4822 which is a mixture of silver and glass frit in a binder, were applied at opposite ends of the multilayer capacitor to connect alternate electrode layers and these capacitors were fired at 815°C in a tunnel furnace. The capacitance (C), dissipation factor (DF) and capacitance change with temperature versus capacitance at 25°C were then measured with model ES1 2110A capacitance bridge at 1 KHz measurement frequency, from -55°C to +125°C at about 20°C intervals. Insulation resistance was measured at 25°C and 125°C after the capacitor was charged for 2 minutes at 50 VDC using a megaohmmeter M16™ manufactured by the London Company, Ontario.

### Examples 2-6

Table 1 shows the weight percent additions of niobium pentoxide and cobalt oxide to barium titanate for a series of compositions prepared according to the method described in Example 1 along with a similar series of compositions (A - H) which were prepared by the conventional mixing of 1 µm (1 micron) ceramic powders. In addition, the surface area, expressed as meters squared per gram, and the average particle size (d50), as determined using the Micromeritics Sedigraph™, are given for both compositional series and illustrate the apparent difference in the physical properties of the compositions prepared by the method described in this invention and by the conventional mixing of 1 µm (1 micron) ceramic oxide particles.

The dielectric properties of these compositions and the composition described in Example 1 and shown in Table 2 along with those obtained from a similar series of compositions (A - H) which were prepared by conventional mixing of 1 micron ceramic oxide particles. The results clearly demonstrate the superior performance of compositions prepared by the method described in this invention. Dielectric constants are higher, within the range 4900 - 5400, dissipation factors are lower, about 1.6% and the RC products are higher, around 7500 ohm-farads.

### Examples 7-8

In Example 7, 500 g of high purity barium titanate was stirred in a solution of 500 ml of cobalt acetate solution containing the equivalent of 2.1674 gram of cobalt oxide (CoO) per litre of deionized water. Stirring was continued for a further 30 minutes and 30 mls of a solution of oxalic acid containing 30.3 g oxalic acid dihydrate ([CO OH]2 2H₂0) per 500 ml of deionized water were added to precipitate cobalt oxalate in a finely divided form. 186.8 ml of a solution of niobium pentachloride in ethanol containing the equivalent of 28.08 grams of niobium pentoxide per litre of deionized water was added to the barium titanate/cobalt oxalate suspension and the mixture stirred for 30 minutes. 20 ml of concentrated ammonium hydroxide was added dropwise to bring the pH to 7.0 and to precipitate hydrous niobium pentoxide and the composite slurry was filtered and washed with deionized water until the washings were determined to be free of chloride ions. The washed mixture was then dried in an oven at 110°C.

Multilayer ceramic capacitors were prepared from the composite slurry as described in Example 1. The electrical test results are shown in Table 3 along with those obtained for Example 8 which was prepared in similar fashion to Example 7 except that 500 ml of cobalt acetate solution containing the equivalent of 2.0798 grams cobalt oxide per litre of water was used with 179.25 ml of niobium pentachloride in ethanol solution containing the equivalent of 28.08 grams niobium pentoxide per litre of water.

The electrical results again show that a dielectric constant of greater than 5000 can be obtained by precipitation of the dopants. Also, dissipation factors are below 2% and temperature stability of the dielectric constant is demonstrated over the temperature range -55°C to °125°C inasmuch as the dielectric constant does not vary by more than plus or minus 15% of its reference value at 25°C.

### Example 9

500 g of high purity BaC0₃ and 202 g of high purity Ti0₂ were thoroughly mixed and dispersed in about 175 ml of deionized water until a uniformly dispersed slurry was obtained. Up to 4 percent by weight of "DARVAN C™"^{3/} may be added to the slurry to help disperse the powder particles. The slurry was then discharged into a drying pan and dried in an oven at about 150°C with forced air circulation. The dried cake was then pulverized and loaded into a ceramic saggar and calcined at a temperature from about 1900°F to about 2200°F (1037-1204°C) for about 1 hour to 5 hours. X-ray diffraction and BaO alkalinity tests on the samples indicated complete reaction and the formation of high purity BaTi0₃. The calcined powder was then vibratory energy milled with Zr₀ media until the average particle size was reduced to 1.0 µm (1.0 micron). Alternative methods of reducing the size to 1.0 µm (1.0 micron) might include ball milling or jet milling.
3 "DARVAN C™" is an alkali ion free aqueous dispersing agent comprising a mixture of polyelectrolytes, ammonia and sulfur available from W.P. Vanderbilt Co., Conn.

500 g of the high purity barium titanate prepared as described above was then mixed with cobalt acetate and niobium pentachloride and processed as described in Example 7 to produce a composite mix of the oxides.

Multilayer ceramic capacitors were prepared as described in Example 1. The electrical results are shown in Table 4 and are compared with those obtained from conventional mixing of 500 g of the same barium titanate with 1.0 micron cobalt oxide and niobium pentoxide in the same proportions. Once again the results showed a significant improvement in dielectric constant as a result of precipitating the dopant ingredients in a controlled manner in a finely divided form.

**TABLE 1**

| Example | BaTi0₃ | Wt % Nb₂0₅ | CoO | Ratio Nb₂0₅/CoO | Wt % Nb₂0₅+CoO | Surface Area | d₅₀ |
|---|---|---|---|---|---|---|---|
| 1 | 98.71 | 1.07 | 0.22 | 4.86 | 1.29 | 5.09 | 1.57 |
| 2 | 98.75 | 1.04 | 0.21 | 4.95 | 1.25 | --- | --- |
| 3 | 98.67 | 1.10 | 0.23 | 4.78 | 1.24 | 5.00 | 1.53 |
| 4 | 98.71 | 1.07 | 0.23 | 4.65 | 1.30 | 5.01 | 1.49 |
| 5 | 98.67 | 1.09 | 0.24 | 4.54 | 1.33 | 5.00 | 1.40 |
| 6 | 98.70 | 1.06 | 0.23 | 4.61 | 1.29 | 4.96 | 1.48 |
| A* | 98.70 | 1.06 | 0.24 | 4.42 | 1.30 | --- | --- |
| B* | 98.67 | 1.11 | 0.22 | 5.04 | 1.33 | --- | --- |
| C* | 98.66 | 1.11 | 0.23 | 4.83 | 1.34 | 2.45 | 1.17 |
| D* | 98.74 | 1.03 | 0.23 | 4.48 | 1.26 | 2.99 | 1.07 |
| E* | 98.81 | 1.04 | 0.15 | 6.93 | 1.19 | 3.40 | 0.99 |
| F* | 98.78 | 1.01 | 0.21 | 4.81 | 1.22 | 2.43 | 1.26 |
| G* | 98.76 | 1.04 | 0.20 | 5.20 | 1.24 | 3.27 | 1.04 |
| H* | 98.79 | 1.00 | 0.21 | 7.76 | 1.21 | 2.67 | 1.22 |

| | | | | | | | |
|---|---|---|---|---|---|---|---|
| Compositions prepared using conventional mixing processes and approximately 1.0 µm (1.0 micron) ceramic oxide powders. | | | | | | | |

**Table 2**

| Example | 1KHz 1VRMS K | DF% | -55°C | TC(%) at -30°C | +85°C | +125°C | RC 50 VDC at 25°C | 125°C |
|---|---|---|---|---|---|---|---|---|
| 1 | 5459 | 1.57 | +9.9 | +8.8 | -8.7 | -3.7 | --- | --- |
| 2 | 4963 | 1.75 | +5.5 | +6.8 | -9.9 | -5.0 | 7599 | 3641 |
| 3 | 5072 | 1.55 | +12.9 | +10.2 | -7.7 | -3.3 | --- | --- |
| 4 | 5266 | 1.58 | +11.7 | +9.9 | -8.4 | -.29 | --- | --- |
| 5 | 5107 | 1.58 | +13.9 | +11.8 | -9.2 | 5.1 | --- | --- |
| 6 | 5191 | 1.57 | +10.4 | +9.7 | -10.0 | -6.1 | --- | --- |
| A* | 4245 | 1.95 | +2.4 | +3.9 | -8.2 | -1.9 | --- | --- |
| B* | 4160 | 2.09 | +2.6 | +5.2 | -8.5 | -4.2 | --- | --- |
| C* | 3948 | 1.83 | +3.2 | +0.9 | -3.0 | +0.6 | 5971 | 2891 |
| D* | 4245 | 1.80 | +5.7 | +6.6 | -8.0 | -5.8 | 5938 | 3083 |
| E* | 4124 | 1.86 | +7.6 | +6.4 | -8.0 | -6.0 | 5727 | 3303 |
| F* | 3969 | 1.89 | +7.2 | +5.4 | -6.0 | +3.3 | 4096 | 1813 |
| G* | 4353 | 2.03 | +1.5 | +3.6 | -8.0 | -5.2 | 4320 | 1920 |
| H* | 4426 | 2.01 | +9.4 | +7.3 | -7.0 | -6.2 | 5144 | 2695 |

**Table 3**

| | Example 7 | Example 8 |
|---|---|---|
| BaTi0₃ (wt%) | 98.71 | |
| Nb₂0₅ (wt %) | 1.07 | 0.99 |
| CoO (wt%) | 0.22 | 0.21 |
| Ratio Nb₂0₅/CoO | 4.86 | 4.71 |
| Wt % Nb₂0₅ + CoO | 1.29 | 1.20 |
| Surface area m/g | 5.10 | 5.05 |
| d₅₀ (Sedigraph) | 1.51 | 1.53 |
| K | 5175 | 5093 |
| dF % | 1.59 | 1.61 |
| TC (%) at -55°C | +9.7 | +10.7 |
| -30°C | +9.2 | +9.5 |
| +85°C | -8.4 | -9.5 |
| +125°C | -5.1 | -6.1 |

**Table 4**

| | Example 9 | Compared with conventionally mixing 1.0 micron powders |
|---|---|---|
| BaTi0₃ | 98.71 | 98.71 |
| Nb₂0₅ (wt %) | 1.07 | 1.07 |
| CoO (wt %) | 0.22 | 0.22 |
| Ratio Nb₂0₅/CoO | 4.86 | 4.86 |
| Wt% Nb₂0₅ + CoO | 1.29 | 1.29 |
| Surface area m/g | 5.05 | 2.68 |
| d₅₀ (Sedigraph) | 1.52 | 1.05 |
| K | 3950 | 3200 |
| dF | 2.1 | 2.3 |
| TC (%) a - 55°C | +5.0% | +4.2% |
| -30°C | +3.5% | +4.2% |
| +85°C | -9.7% | -9.8% |
| +125°C | -7.2% | -1.1% |

### Examples 10 - 11

In Example 10, 500 g of high purity barium titanate and 5.2453 g of fine particles size 1.0 µm (1.0 micron) niobium pentoxide was added to 500 ml of cobalt acetate solution containing the equivalent of 2.1674 g of cobalt oxide (CoO) per litre of deionized water and stirred continuously for 3 hours to ensure adequate mixing of the reagents. 30 ml of a solution of oxalic acid containing 30.3 g oxalic acid dihydrate ([COOH]₂ ˙ 2H₂O) per 500 ml of deionized water were added to precipitate cobalt oxalate in a finely divided form. The composite slurry was filtered, washed and dried in an oven at 110°C.

Multilayer ceramic capacitors were prepared from the composite slurry as described in Example 1. The electrical test results are shown in Table 5 along with those obtained for Example 11 which was prepared in a similar fashion to Example 10 except that 500 g of high purity barium titanate and 5.0331 g of fine particle size (1.0 µm (1.0 micron)) niobium pentoxide were added to 500 mls of cobalt acetate solution containing the equivalent of 2.0798 g of cobalt oxide per 500 mls of deionized water.

**Table 5**

| | Example 10 | Example 11 |
|---|---|---|
| BaTi0₃ (Wt%) | 98.75 | 98.80 |
| Nb₂0₅ (Wt%) | 1.04 | 0.99 |
| CoO (Wt%) | 0.21 | 0.21 |
| Ratio Nb₂05 / CoO | 4.84 | 4.84 |
| Wt % Nb₂0₅ + CoO | 1.25 | 1.20 |
| Surface area m/g | 2.92 | 2.94 |
| d50 | 1.52 | 1.52 |
| K | 4372 | 4690 |
| dF % | 1.62 | 1.64 |
| TC (%) at -55°C | +4.0 | -2.2 |
| -30°C | +4.5 | +0.7 |
| +85°C | -7.2 | -10.5 |
| +125°C | -3.0 | -6.2 |

## Claims

1. A method for making a dielectric ceramic having dopant particles uniformly dispersed therein comprising:
dispersing 1 micron (1 x 10⁻⁶m) diameter major component particles in a liquid medium;
precipitating 0.1 micron (1 x 10⁻⁷m) diameter dopant particles from the liquid medium which also contains a precursor of the dopant under conditions such that the major component particles are charged oppositely to the dopant particles, which conditions are controlled by maintaining the pH of the liquid medium within a selected range of values, such that the dopant particles are dispersed throughout the major component particles and the dopant particles are associated with the major component particles;
removing the liquid medium from the dispersion; and
sintering the remainder.

2. The method of claim 1 in which the precursor of the dopant is added to the liquid medium containing the major component particles; and
wherein the dopant is precipitated in the presence of the major component particles.

3. The method of claim 1 or claim 2 in which the dopant particles comprise a first dopant, and a second dopant which second dopant is dispersed by precipitating it in the presence of the major component particles.

4. The method of any preceding claim in which the major component is barium titanate and the dopant particles comprise niobium pentoxide and/or cobalt oxide.

5. The method according to any of claims 1 to 3 in which the major component is a perovskite forming metal oxide.

6. A method for making a multilayer ceramic capacitor having a plurality of layers of dielectric ceramic prepared according to the method of any preceeding claim and a plurality of electrodes between the dielectric layers wherein the dopant particles comprise precipitated niobium pentoxide particles and cobalt oxide particles and the major component particles comprise barium titanate particles, the dopant particles being in fixed proportion to the major component particles such that the dielectric ceramic when fired has a dielectric constant between about 4900 and 5400, a dissipation factor of below about 2.0%, an insulation resistance capacitance product above about 7000 ohm-farads at 25°C and above about 3000 ohm-farads at 125°C and a temperature stable temperature coefficient in which the dielectric constant does not vary more than plus or minus 15% from its value at 25°C over the temperature range from -55°C to 125°C.

## Patentansprüche

1. Verfahren zur Herstellung einer dielektrischen Keramik mit darin gleichförmig dispergierten Dotierungsteilchen, umfassend:
Dispergieren von Hauptkomponententeilchen eines Durchmessers von 1 µm (1 x 10⁻⁶ m) in einem flüssigen Medium; Abscheiden von Dotierungsteilchen eines Durchmessers von 0,1 µm (1 x 10⁻⁷ m) aus dem flüssigen Medium, das auch einen Vorläufer des Dotierungsmittels enthält, unter solchen Bedingungen, daß die Hauptkomponententeilchen entgegengesetzt zu den Dotierungsteilchen aufgeladen werden, wobei die Bedingungen durch Beibehalten des pH-Werts des flüssigen Mediums innerhalb eines ausgewählten Bereichs von Werten gesteuert werden, so daß die Dotierungsteilchen innerhalb der Hauptkomponententeilchen dispergiert sind, und die Dotierungsteilchen mit den Hauptkomponententeilchen assoziiert sind;
Entfernen des flüssigen Mediums von der Dispersion, und Sintern des Rests.

2. Verfahren gemäß Anspruch 1, worin der Vorläufer des Dotierungsmittels zu dem flüssigen Medium, das die Hauptkomponententeilchen enthält, gegeben wird, und worin das Dotierungsmittel in Gegenwart der Hauptkomponententeilchen abgeschieden wird.

3. Verfahren gemäß Anspruch 1 oder 2, worin die Dotierungsteilchen ein erstes Dotierungsmittel und ein zweites Dotierungsmittel umfassen, wobei das zweite Dotierungsmittel durch sein Abscheiden in Gegenwart der Hauptkomponententeilchen dispergiert wird.

4. Verfahren gemäß irgendeinem der vorhergehenden Ansprüche, worin die Hauptkomponente Bariumtitanat ist, und die Dotierungsteilchen Niobpentoxid und/oder Cobaltoxid umfassen.

5. Verfahren gemäß irgendeinem der vorhergehenden Ansprüche 1-3, worin die Hauptkomponente ein Perovskit-bildendes Metalloxid ist.

6. Verfahren zur Herstellung eines keramischen Mehrschichten-Kondensators, der eine Vielzahl dielektrischer Keramikschichten hat, die gemäß dem Verfahren irgendeiner der vorhergehenden Ansprüche hergestellt wurden, und eine Vielzahl von Elektroden zwischen den dielektrischen Schichten hat, worin die Dotierungsteilchen abgeschiedene Niobpentoxidteilchen und Cobaltoxidteilchen umfassen, und die Hauptkomponententeilchen Bariumtitanat-Teilchen umfassen, die Dotierungsteilchen in fester Proportion zu den Hauptkomponententeilchen vorliegen, so daß die dielektrische Keramik nach dem Brennen eine Dielektrizitätskonstante zwischen etwa 4900 und 5400, einen dielektrischen Verlustfaktor von weniger als etwa 2,0%, ein Isolierwiderstand-Kapazitanz-Produkt von mehr als etwa 7000 Ohm-Farad bei 25°C und mehr als etwa 3000 Ohm-Farad bei 125°C, und einen temperaturstabilen Temperaturkoeffizienten hat, bei dem die Dielektrizitätskonstante nicht mehr als plus oder minus 15% von ihrem Wert bei 25°C über dem Temperaturbereich von -55°C bis 125°C variiert.

## Revendications

1. Procédé pour fabriquer une céramique diélectrique comportant des particules de dopant dispersées intérieurement de manière uniforme, comprenant les étapes consistant à :
disperser des particules d'un constituant principal d'un diamètre d'un micromètre (1 x 10⁻⁶m) dans un milieu liquide;
précipiter des particules de dopant d'un diamètre de 0,1 micromètre (1 x 10⁻⁷m) à partir du milieu liquide qui contient aussi un précurseur de dopant dans des conditions telles que les particules du constituant principal sont chargées avec un signe opposé à celui des particules de dopant, conditions qui sont contrôlées en maintenant le pH du milieu liquide à l'intérieur d'une gamme sélectionnée de valeurs, de façon que les particules de dopant soient dispersées dans la totalité des particules du constituant principal et que les particules de dopant soient associées aux particules du constituant principal;
enlever de la dispersion le milieu liquide; et
fritter le reste.

2. Procédé selon la revendication 1, dans lequel le précurseur de dopant est ajouté au milieu liquide contenant les particules du constituant principal; et
dans lequel le dopant est précipité en présence des particules du constituant principal.

3. Procédé selon la revendication 1 ou la revendication 2, dans lequel les particules de dopant comprennent un premier dopant et un second dopant, second dopant qui est dispersé en le précipitant en présence des particules du constituant principal.

4. Procédé selon l'une quelconque des revendications précédentes, dans lequel le constituant principal est du titanate de baryum et les particules de dopant comprennent du pentoxyde de niobium et/ou de l'oxyde de cobalt.

5. Procédé selon l'une quelconque des revendications 1 à 3, dans lequel le constituant principal est un oxyde métallique formant une perovskite.

6. Procédé pour fabriquer un condensateur céramique à couches multiples ayant une multitude de couches de céramique diélectrique préparées conformément au procédé de l'une quelconque des revendications précédentes et une multitude d'électrodes entre les couches diélectriques, dans lequel les particules de dopant comprennent des particules de pentoxyde de niobium et des particules d'oxyde de cobalt précipitées et les particules du constituant principal comprennent des particules de titanate de baryum, les particules de dopant étant dans une proportion fixe avec les particules du constituant principal de façon que la céramique diélectrique présente après cuisson une constante diélectrique comprise entre environ 4900 et 5400, un facteur de dissipation inférieur à environ 2,0 %, une résistance-capacitance d'isolation du produit supérieure à environ 7000 ohms-farads à 25°C et supérieure à environ 3000 ohms-farads à 125°C et un coefficient de température stable vis-à-vis de la température dans lequel la constante diélectrique ne varie pas plus que plus ou moins 15 % par rapport à sa valeur à 25°C dans la gamme de température comprise entre -55°C et 125°C.
